# EUROPEAN PATENT SPECIFICATION

(11) **EP 2 695 509 B1**
(45) Date of publication and mention of the grant of the patent: **18.03.2015**
(21) Application number: 13177896.1
(22) Date of filing: 24.07.2013
(51) Int. Cl.: A01D 41/14, A01D 45/02

(54) **Folding head for a corn-shelling machine and/or combine harvester and method of folding back a head for a corn-shelling machine and/or combine harvester**
Klappkopf für eine Maisschälmaschine und/oder Mähdrescher und Verfahren zum Zurückklappen eines Kopfes einer Maisschälmaschine und/oder Mähdreschers
Tête de pliage pour une machine de broyage de maïs et/ou de moissonneuse-batteuse et procédé permettant de replier une tête de machine de broyage et/ou de moissonneuse-batteuse

(30) Priority: 06.08.2012 IT PD20120242
(43) Date of publication of application: 12.02.2014
(73) Proprietor: F.LLI CRESSONI SpA, 46049 Volta Mantovana (MN) (IT)
(72) Inventor: Cressoni, Romano, I-46049 Volta Mantovana, Mantova (IT)
(74) Representative: Mitola, Marco

(56) References cited:
- EP-A1- 0 131 853
- EP-A1- 0 750 833
- EP-A1- 1 932 416
- EP-A2- 1 051 895
- DE-C1- 3 828 293

## Description

The present invention relates to a folding head for a corn-shelling machine and/or combine harvester suitable for performing the detachment or shelling of the cobs of the relative stem or stalk of cob plants (see e.g. EP-A-131853). The present invention also relates to a method of folding back a head for a corn-shelling machine and/or combine harvester.

In particular, the head is placed in front of the corn-shelling machine and/or combine harvester and is provided with a plurality of devices suitable for carrying out the shelling of cobs.

The head usually has considerable transversal dimensions, i.e. perpendicular to the advancement direction of the corn-shelling machine and/or combine harvester in order to harvest as many cobs as possible upon each passage.

Such transversal dimensions may also exceed 10 meters. The heads often need to be removed from the machine and carried, for example by means of a combine harvester. In order to be carried on combine harvesters, it is essential to be able to fold said heads.

Solutions of folding heads for corn-shelling machines and/or combine harvesters are known in the art, wherein the head comprises a central portion and two lateral portions hinged at opposite sides to the central portion. The hinge axes are arranged parallel to the advancement direction of the head. The central portion has an extension equal to half the total transversal extension of the head while each lateral portion has a transversal extension equal to ¼ of the total extension. In this way, each lateral portion can be upturned on top of the central portion and in folded configuration, the head takes on a transversal size equal to half the maximum size in working configuration.

However, such known solution has some limitations since the total dimensions are still equal to half the maximum ones: this means that for larger heads, such dimensions in folded configuration will still be equal to 5-6 m. Such dimensions are excessive for the dimensions of the combine harvester and require the use of oversize loads with the relative security and the relative transport cost.

The object of the present invention is to provide a head for a corn-shelling machine and/or combine harvester which should solve the drawbacks mentioned with reference to the prior art.

In particular, the object of the present invention is to provide a head for a corn-shelling machine and/or combine harvester which, in folded configuration, can reduce as much as possible the dimensions so as to be easily coupled on a combine harvester so as to fall within the combine harvester profile and not require the use of oversize loads; at the same time, said head must be reliable without impairing the functions of cob harvesting when in working configuration.

Such object is achieved by a head for a corn-shelling machine and/or combine harvester according to claim 1 and by a method of folding back a head for a corn-shelling machine and/or combine harvester according to claim 13.

Other embodiments of the present invention are described in the subsequent claims.

Further features and the advantages of the present invention will appear more clearly from the following description of preferred non-limiting embodiments thereof, in which:
figures 1a-1c respectively show a perspective, front and top plan view of a corn-shelling machine and/or combine harvester according to an embodiment of the present invention, said machine being in operating condition;
figures 2a-2c respectively show a perspective, front and top plan view of a corn-shelling machine and/or combine harvester according to an embodiment of the present invention, said machine being in a folding step;
figures 3a-3c respectively show a perspective, front and top plan view of a corn-shelling machine and/or combine harvester according to an embodiment of the present invention, said machine being in a further folding step;
figures 4a-4d respectively show a perspective, front, lateral and top plan view of a corn-shelling machine and/or combine harvester according to an embodiment of the present invention, said machine being in final folding condition;
figures 5a-5e show front views of the folding steps of a corn-shelling machine and/or combine harvester according to a further embodiment of the present invention.

Elements or parts of elements in common between the embodiments described below are referred to with the same reference numerals.

With reference to the above figures, reference numeral 4 globally denotes a head for a corn-shelling machine and/or combine harvester suitable for performing the shelling of cobs.

The corn-shelling machine and/or combine harvester comprises head 4 which may be associated to a drive which has the function of carrying the head, move it, operate it and convey and harvest the cobs as they are shelled.

In a known manner, head 4 comprises at least one pair of sheller rollers 8 which are counter-rotating in relation to relative rotation axes and fitted with blades (not shown) for pulling the stack of a corn on the cob plant downwards; the rotation of the sheller rollers 8 therefore is such as to obtain such downward movement or shelling of the cobs.

According to an embodiment, head 4 is also fitted with sheller plates, arranged on top of the sheller rollers, opposite to the ground, so as to oppose resistance to the passage of the cob: in this way, the cob is torn from the stalk.

Head 4 for a corn-shelling machine and/or combine harvester extends along a main transversal direction Y-Y, perpendicular to a longitudinal advancement direction X-X of head 4 in the working or operating step.

Head 4 comprises a central portion 12 which extends along the main transversal direction Y-Y between opposite transversal ends 16, 18 and two lateral portions 20, 22 positioned on opposite sides to the central portion 12 at each transversal end 16, 18 and aligned with the central portion 12 in a working condition of head 4.

Preferably, the lateral portions 20, 22 are equal to each other and arranged on opposite sides relative to the central portion 12.

Each lateral portion 20, 22 extends from an inner end 24, alongside the corresponding transversal end 16, 18 of the central portion 12 in a working configuration, to an external end 28, opposite the inner end 24 in relation to the transversal direction Y-Y, in a working configuration.

Each lateral portion 20, 22 is operatively connected to the central portion 12 by means of the interposition of connection means 32 comprising a relative arm 34 which connects each lateral portion 20, 22 to the central portion 12.

In particular, the connection means 32 comprise a first hinge 36 defining a first rotation axis R' parallel to the longitudinal direction X-X of advancement of the head 4, so as to separate and raise the lateral portions 20, 22 in relation to the central portion 12, and comprising a second hinge 40 defining a second rotation axis R", perpendicular to the first rotation axis R', so as to rotate the lateral portions 20, 22 in reciprocal approach towards a centreline plane M-M of the central portion 12 and to position them on a plane substantially perpendicular to said transversal direction Y-Y.

The head 4 further comprises drive means 44 for moving the lateral portions 20, 22 so as to pass from a working configuration wherein the lateral portions 20, 22 are alongside and aligned with the central portion 12, to a folded configuration wherein the lateral portions 20, 22 are at least partially folded and overlapping the central portion 12.

The drive means preferably are hydraulic and/or pneumatic drive motors, such as cylinders and respective pistons or stems of the hydraulic and/or pneumatic type.

The drive means 44 are operatively connected to the connection means 32 and/or to the lateral portions 20, 22 so as to move the lateral portions 20, 22 in relation to said first and second hinge 36, 40, folding them at least partially onto the central portion 12.

According to an embodiment, the first and the second hinge 36, 40 are positioned at a first connection end 48 of arm 34 to the central portion 12.

According to an embodiment, first drive means 45 are positioned at said first connection end 48 of arm 34 to the central portion 12 so as to control the rotation movements of the lateral portion 20, 22 in relation to the first and second hinge 36, 40.

Arm 34 is in turn connected to the lateral portion 20, 22 at a second connection end 52 at which a third hinge 56 is positioned, defining a third rotation axis R"' parallel to the first rotation axis R', when head 4 is in a working configuration.

Preferably, the second connection end 52 is positioned between a centreline S of the lateral portion 20, 22 and said inner end 24 of the same lateral portion.

Preferably, arm 34 is U-shaped so as to delimit a concave seat 60 facing the lateral portion 20, 22 and so as to permit the rotation of the lateral portion 20, 22 around the third rotation axis R"', said concave seat 60 housing at least partially the section of lateral portion 20, 22 included between the second connection end 52 and the inner end 24 of the lateral portion 20, 22, during the rotation of the latter around the third rotation axis R"'.

Preferably, arm 34 is fitted with second drive means 46 positioned at the second end 52 so as to move the lateral portion 20, 22 in relation to the third hinge 56.

According to a further embodiment, each lateral portion 20, 22 is in turn composed of a pair of sections 64 alongside and hinged to each other in relation to a fourth hinge 68 defining a fourth rotation axis W parallel to the first rotation axis R' in a working configuration of head 4, it being possible to fold back the sections 64 on to each other.

The lateral portion 20, 22 preferably comprises drive means (not shown) positioned on the lateral portion 20, 22 itself so as to allow the folding of sections 64 relative to said fourth hinge 68.

Preferably, sections 64 substantially have a transversal dimension equal to half the transversal dimension of the lateral portion 20, 22.

Preferably, the central portion 12 has a transversal extension T less than or equal to a third of the total transversal extension V of head 4 in a working configuration.

According to an embodiment, the lateral portions 20, 22 are fitted with front tips 76 positioned frontally to the sheller rollers 8 so as to intercept the cobs before the rollers, wherein said front tips 76 comprise a rear portion 80 facing roller 8, and a front portion 84, opposite the rear portion 80. In particular, the front portion 84 is hinged to the rear portion 80 in relation to a tip axis 88 parallel to the main transversal direction Y-Y in a working configuration, so as to be able to overlap the front portion 84 on the rear portion 80 in a folded configuration of head 4. According to a possible embodiment, the head is fitted with drive means for moving and folding the front tips 76 relative to the rear tips 80.

The method of folding back a head for a corn-shelling machine and/or combine harvester according to the invention will now be described.

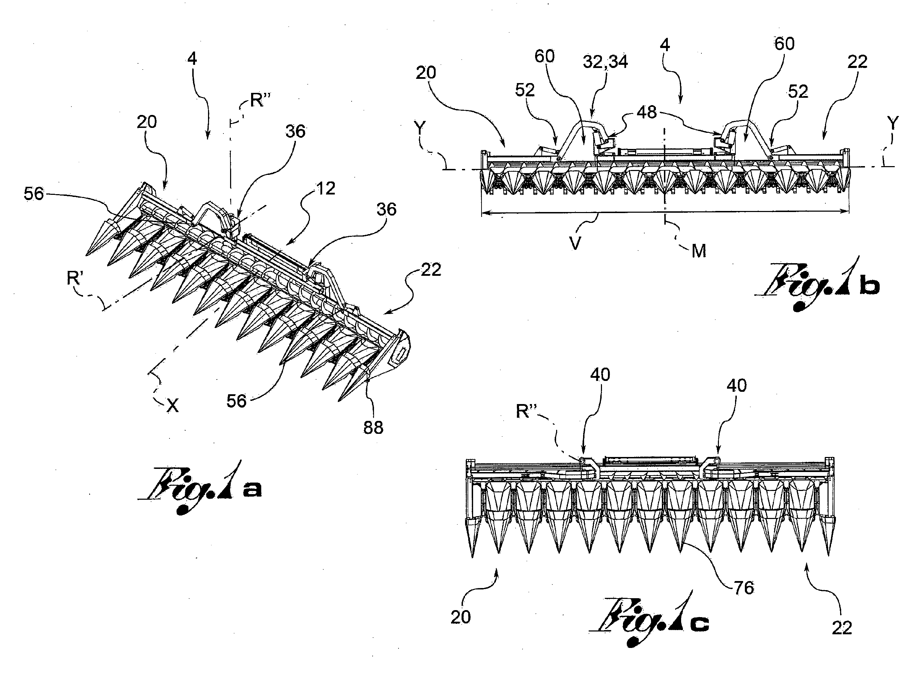

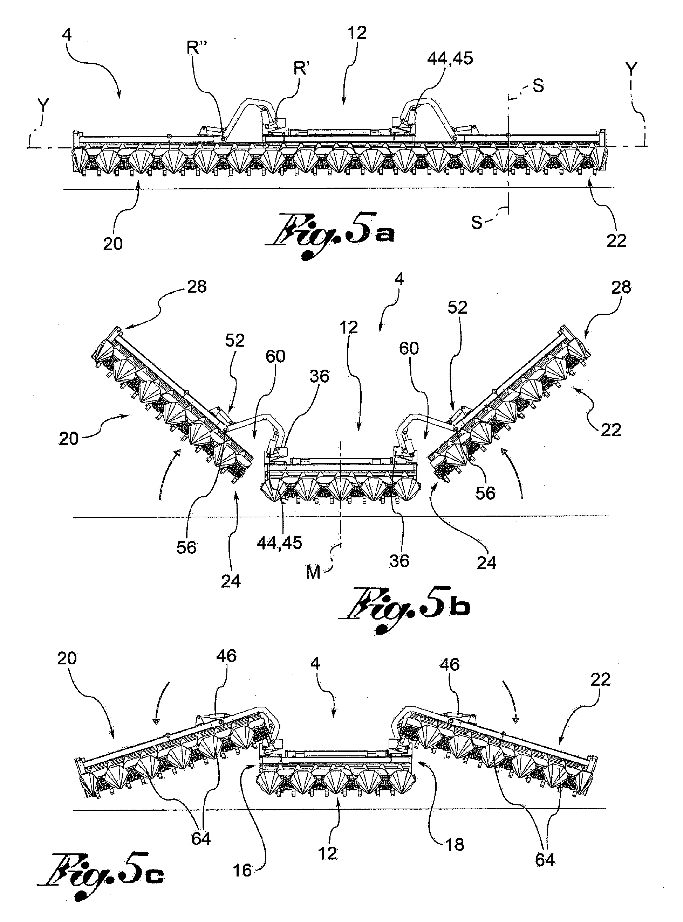

In particular, head 4 is positioned in a working configuration wherein the lateral portions 20, 22 are aligned in relation to the central portion 12 (figure 1a-1c, 5a).

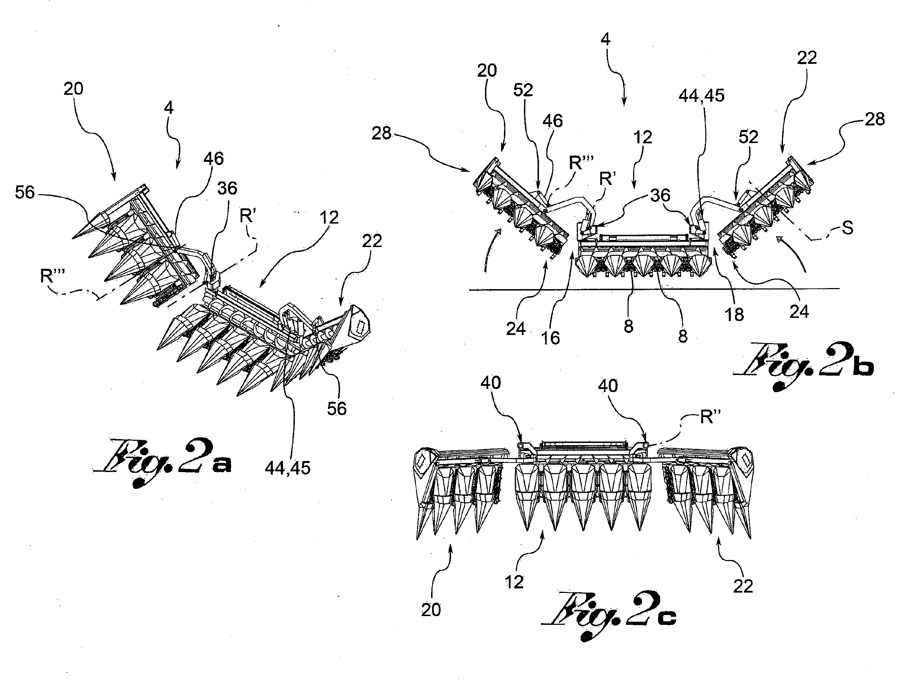

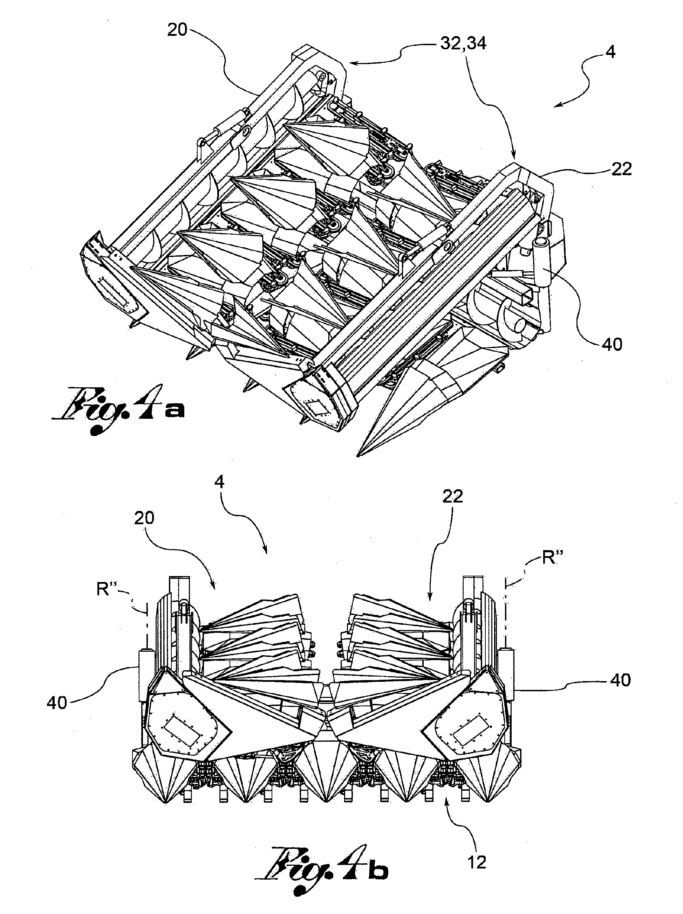

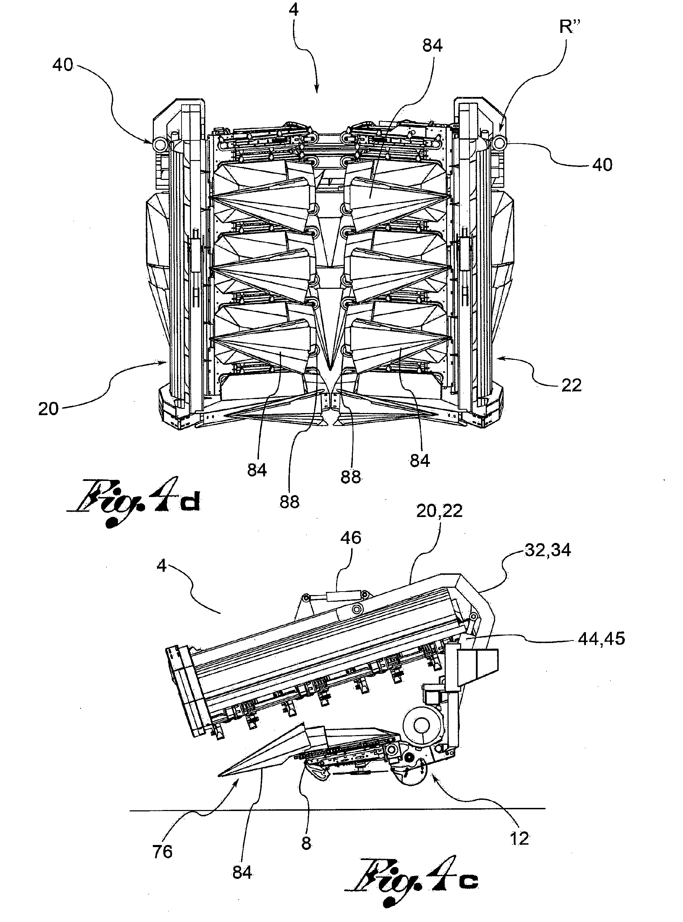

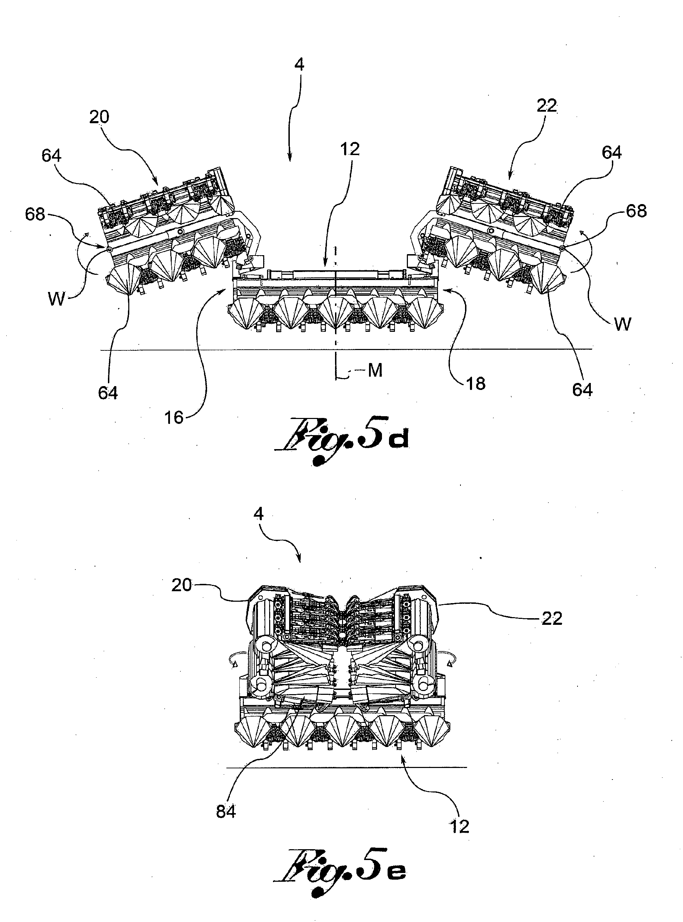

The lateral portions 20, 22 are rotated around the first hinge 36, defining the first rotation axis R', so as to separate and raise the lateral portions 20, 22 in relation to the central portion 12 (figures 2a-2c, 5b). Then, the lateral portions 20, 22 are rotated around the second hinge 40 defining a second rotation axis R' perpendicular to the first rotation axis R', so as to rotate the lateral portions 20, 22 in reciprocal approach towards a centreline plane M-M of the central portion 12 and to position them on a plane substantially perpendicular to said transversal direction Y-Y (figures 4a-4d, 5e).

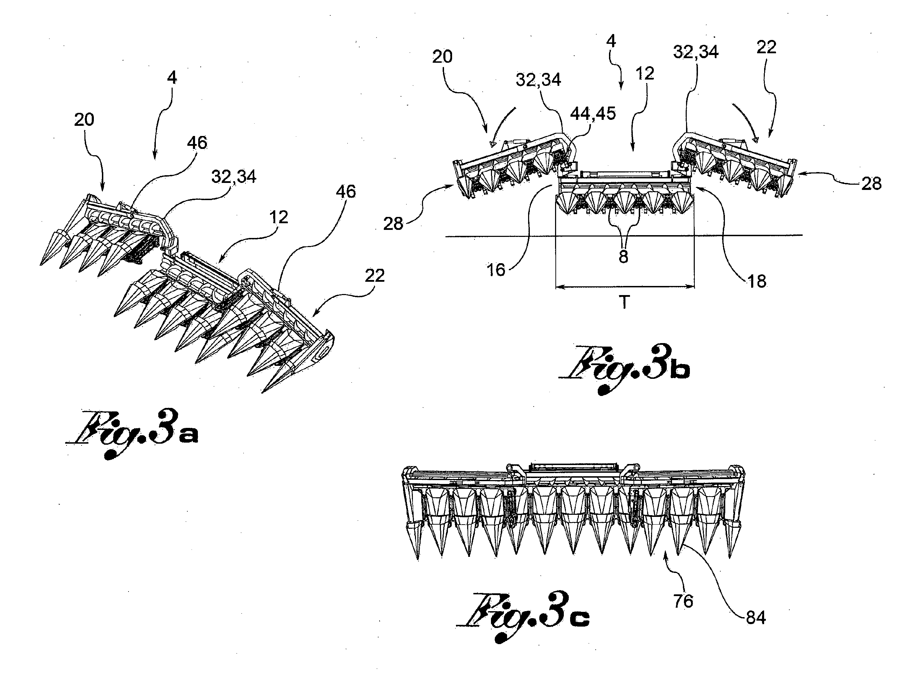

It is also possible to position an arm 34 connected to the lateral portion 20, 22 at the second connection end 52 wherein, at said second connection end 52, a third hinge 56 is positioned defining a third rotation axis R"' parallel to the first rotation axis R', when head 4 is in a working configuration. Arm 34 is U-shaped so as to delimit a concave seat 60 facing the lateral portion 20, 22; the lateral portion 20, 22 is then rotated around the third rotation axis R"', so that said concave seat 60 houses at least partially the section of lateral portion 20, 22 included between the second connection end 52 and the inner end 24 of the lateral portion 20, 22, during the rotation of the latter around the third rotation axis R"' (figures 3a-3c; 5c).

Preferably, the step of rotating the lateral portions 20, 22 around the third rotation axis R"' is carried out before the step of rotating the lateral portions 20, 22 around the second rotation axis R".

In the version of head 4 provided with lateral portions 20, 22 divided into two sections 64, it is preferable to fold sections 64 on themselves (figure 5d) after rotating the lateral portions 20, 22, in extended configuration, around the third rotation axis R"' (figure 5c) and before rotating the same lateral portions 20, 22 around the second rotation axis R" (figure 5e).

It is also possible to fit the lateral portions 20, 22 with front tips 76 positioned frontally to the sheller rollers 8 so as to intercept the cobs before the same rollers. [0052] The front tips are fitted with rear portion 80 and front portion 84; the folding steps contemplates rotating the front portion 84 so as to overlap it on the rear portion 80 in a folded configuration of head 4, said rotation of the front portion 84 being performed before the rotation of the lateral portions 20, 22 in reciprocal approach towards the centreline plane M-M of the central portion 12 (figures 4a-4d, 5e).

As can be understood from the description, the corn-shelling machine and/or combine harvester according to the invention allows the drawbacks of the prior art to be overcome.

In fact, the head can be folded so as to have a total transversal dimension equal to about one third compared to the total transversal dimension in operating condition.

The folding operation occurs in a quick and optionally automated manner so as not to require the manual intervention.

The head can therefore be easily carried on a combine harvester without requiring the intervention of oversize load means. This simplifies the transport of the head which is easy and cost-effective.

Thanks to the present invention it is therefore possible to easily fold and carry even heads comprising 17 front tips and having a transversal dimension of more than 12 meters in operating condition.

A man skilled in the art may make several changes and adjustments to the corn-shelling machines and/or combine harvesters and to the methods described above in order to meet specific and incidental needs, all falling within the scope of protection defined in the following claims.

## Claims

1. Folding head (4) for a corn-shelling machine and/or combine harvester suitable for performing the shelling of cobs, the head (4) extending in a transversal direction (Y-Y), perpendicular to a longitudinal direction (X-X) of advancement of the head (4) in the working step, and comprising at least one sheller roller (8) rotating in relation to a relative rotation axis and fitted with blades to pull a stalk of a corn on the cob plant downwards,
- the head (4) comprising a central portion (12) extending along the main transversal direction (Y-Y) between opposite transversal ends (16, 18)and two lateral portions (20, 22) positioned on opposite sides to the central portion (12) at each transversal end (16, 18) and aligned with the central portion (12) in a working condition of the head (4),
- each lateral portion (20, 22) extending from an inner end (24), alongside the corresponding transversal end (16, 18) of the central portion (12) in a working configuration, to an external end (28), opposite the inner end (24) in relation to the transversal direction (Y-Y), in a working configuration,
- the head (4) comprising drive means (44) for moving the lateral portions (20, 22) so as to pass from a working configuration wherein the lateral portions (20, 22) are alongside and aligned with the central portion (12), to a folded configuration wherein the lateral portions (20, 22) are at least partially folded and overlapping the central portion (12),
- each lateral portion (20, 22) is operatively connected to the central portion (12) by means of the interposition of connection means (32) comprising a relative arm (34) which connects each lateral portion (20, 22) to the central portion (12),
- wherein the connection means (32) comprise a first hinge (36) defining a first rotation axis (R') parallel to the longitudinal direction (X-X) of advancement of the head (4), so as to separate and raise the lateral portions (20, 22) in relation to the central portion (12), and **characterised in that** it comprises a second hinge (40) defining a second rotation axis (R"), perpendicular to the first rotation axis (R'), so as to rotate the lateral portions (20, 22) in reciprocal approach towards a centreline plane (M-M) of the central portion (12) and to position them on a plane substantially perpendicular to said transversal direction (Y-Y).

2. Head (4) according to claim 1, wherein the drive means (44) are operatively connected to the connection means (32) and/or to the lateral portions (20, 22) so as to move the lateral portions (20, 22) in relation to said first and second hinge (36, 40), folding them at least partially onto the central portion (12).

3. Head (4) according to claim 1 or 2, wherein the first and second hinge (36, 40) are positioned at a first connection end (48) of the arm (34) to the central portion (12).

4. Head (4) according to claim 1, 2 or 3, wherein first drive means (45) are positioned at a first connection end (48) of the arm (34) to the central portion (12) so as to control the rotation movements of the lateral portion (20, 22) in relation to the first and second hinge (36, 40).

5. Head (4) according to any of the claims from 2 to 5, wherein the arm (34) is connected to the lateral portion (20, 22) at a second connection end (52) at which a third hinge (56) is positioned defining a third rotation axis (R"') parallel to the first rotation axis (R'), when the head (4) is in a working configuration.

6. Head (4) according to claim 5, wherein said second connection end (52) is positioned between a centreline of the lateral portion (20, 22) and said inner end (24) of the same lateral portion.

7. Head (4) according to any one of claims from 5 to 6, wherein the arm (34) is U-shaped so as to delimit a concave seat (60) facing the lateral portion (20, 22) and so as to permit the rotation of the lateral portion (20, 22) around the third rotation axis (R"'), said concave seat (60) housing at least partially the section of lateral portion (20, 22) included between the second connection end (52) and the inner end (24) of the lateral portion (20, 22), during the rotation of the latter around the third rotation axis (R"').

8. Head (4) according to any one of claims from 5 to 7, wherein the arm (34) is fitted with second drive means (46) positioned at the second connection end (52) so as to move the lateral portion (20, 22) in relation to the third hinge (56).

9. Head (4) according to any one of the preceding claims, wherein each lateral portion (20, 22) is in turn composed of a pair of sections (64) alongside and hinged to each other in relation to a fourth hinge (68) defining a fourth rotation axis (W) parallel to the first rotation axis (R') in a working configuration of the head (4), it being possible to fold back the sections (64) on to each other.

10. Head (4) according to claim 9, wherein said sections (64) substantially have a transversal dimension equal to half the transversal dimension of the lateral portion (20, 22).

11. Head (4) according to any one of the preceding claims, wherein the central portion (12) has a transversal extension (T) less than or equal to a third of the total transversal extension (V) of the head (4) in a working configuration.

12. Head (4) according to any one of the preceding claims, wherein the lateral portions (20, 22) are fitted with front tips (76) positioned frontally to the sheller rollers (8) so as to intercept the cobs before the rollers, wherein said front tips (76) comprise a rear portion (80) facing the roller (8), and a front portion (84), opposite the rear portion (80), the front portion (84) being hinged to the rear portion (80) in relation to a tip axis (88) parallel to the main transversal direction (Y-Y) in a working configuration, so as to be able to overlap the front portion (84) on the rear portion (80) in a folded configuration of the head (4).

13. Method of folding back a head for a corn-shelling machine and/or combine harvester comprising the steps of:
- predisposing a head (4) for a corn-shelling machine and/or combine harvester according to any one of claims from 1 to 12,
- positioning said head (4) in a working configuration wherein the lateral portions (20, 22) are aligned in relation to the central portion (12),
- rotating the lateral portions (20,22) around the first hinge (36) defining a first rotation axis (R') parallel to the longitudinal direction (X-X) of advancement of the head (4), so as to separate and raise the lateral portions (20, 22) in relation to the central portion (12),
- rotating the lateral portions (20, 22) around the second hinge (40) defining a second rotation axis (R') perpendicular to the first rotation axis (R'), so as to rotate the lateral portions (20, 22) in reciprocal approach towards a centreline plane (M-M) of the central portion (12) and to position them on a plane substantially perpendicular to said transversal direction (Y-Y).

14. Method of folding according to claim 13, comprising the steps of:
- positioning an arm (34) connected to the lateral portion (20, 22) at a second connection end (52) wherein, at said second connection end (52), a third hinge (56) is positioned defining a third rotation axis (R"') parallel to the first rotation axis (R'), when the head (4) is in a working configuration,
- wherein the arm (34) is U-shaped so as to delimit a concave seat (60) facing the lateral portion (20, 22)
- rotating the lateral portion (20, 22) around the third rotation axis (R"') so that said concave seat (60) houses at least partially the section of lateral portion (20, 22) included between the second connection end (52) and the inner end (24) of the lateral portion (20, 22), during the rotation of the latter around the third rotation axis (R"').

15. Method of folding according to claim 13 or 14, comprising the steps of:
- fitting the lateral portions (20, 22) with front tips (76) positioned frontally to the sheller rollers so as to intercept the cobs before the rollers,
- the front tips (76) comprising a rear portion (80) facing the rollers (8), and a front portion (84), opposite the rear portion (80), the front portion (84) being hinged to the rear portion (80) in relation to a tip axis (88) parallel to the main transversal direction (Y-Y) in a working configuration,
- rotating the front portion (84) so as to be able to overlap it on the rear portion (80) in a folded configuration of the head, said rotation of the front portion being performed before the rotation of the lateral portions (20,22) in reciprocal approach towards the centreline plane (M-M) of the central portion (12).

## Patentansprüche

1. Klappkopf (4) für eine Maisschälmaschine und/oder einen Mähdrescher, der geeignet ist, um das Schälen von Kolben durchzuführen, wobei der Kopf (4) sich in dem Arbeitsschritt in einer transversalen Richtung (Y-Y) senkrecht zu einer Längsrichtung (X-X) des Vorrückens des Kopfs (4) erstreckt, und der wenigstens eine Schälerwalze (8) umfasst, die sich in Bezug auf eine relative Drehachse dreht und mit Klingen ausgestattet ist, um einen Maisstängel auf der Kolbenpflanze nach unten zu ziehen,
- wobei der Kopf (4) einen zentralen Abschnitt (12), der sich entlang der Haupttransversalrichtung (Y-Y) zwischen entgegengesetzten transversalen Enden (16, 18) erstreckt, und zwei seitliche Abschnitte (20, 22), die auf zu dem zentralen Abschnitt (12) entgegengesetzten Seiten an jedem transversalen Ende (16, 18) positioniert sind und in einem Arbeitszustand des Kopfs (4) mit dem zentralen Abschnitt (12) ausgerichtet sind, umfasst,
- wobei jeder seitliche Abschnitt (20, 22) sich in einem Arbeitsaufbau von einem inneren Ende (24) längsseits des entsprechenden transversalen Endes (16, 18) des zentralen Abschnitts (12) zu einem äußeren Ende (28) erstreckt, das in einem Arbeitsaufbau in Bezug auf die Transversalrichtung (Y-Y) entgegengesetzt zu dem inneren Ende (24) ist,
- wobei der Kopf Antriebsmittel (44) zum Bewegen der seitlichen Abschnitte (20, 22) umfasst, um von einem Arbeitsaufbau, in dem die seitlichen Abschnitte (20, 22) längsseits und mit dem zentralen Abschnitt (12) ausgerichtet sind, zu einem geklappten Aufbau, in dem die seitlichen Abschnitte (20, 22) wenigstens teilweise geklappt sind und den zentralen Abschnitt (12) überlappen, überzugehen,
- wobei jeder seitliche Abschnitt (20, 22) mit Hilfe des Einfügens von Verbindungsmitteln (32), die einen jeweiligen Arm (34) umfassen, der jeden seitlichen Abschnitt (20, 22) mit dem zentralen Abschnitt (12) verbindet, betriebsfähig mit dem zentralen Abschnitt (12) verbunden ist,
- wobei die Verbindungsmittel (32) ein erstes Gelenk (36) umfassen, das eine erste Drehachse (R') parallel zu der Längsrichtung (X-X) des Vorrückens des Kopfs (4) definiert, um die seitlichen Abschnitte (20, 22) in Bezug auf den zentralen Abschnitt (12) zu trennen und anzuheben, und
**dadurch gekennzeichnet, dass** er umfasst:
ein zweites Gelenk (40), das eine zweite Drehachse (R") senkrecht zu der ersten Drehachse (R') definiert, um die seitlichen Abschnitte (20, 22) in gegenseitiger Annäherung in Richtung einer Mittelachsenebene (M-M) des zentralen Abschnitts (12) zu drehen und sie auf einer Ebene im Wesentlichen senkrecht zu der Transversalrichtung (Y-Y) zu positionieren.

2. Kopf (4) nach Anspruch 1, wobei die Antriebsmittel (44) betriebsfähig mit den Verbindungsmitteln (32) und/oder den seitlichen Abschnitten (20, 22) verbunden sind, um die seitlichen Abschnitte (20, 22) in Bezug auf das erste und zweite Gelenk (36, 40) zu bewegen, wobei sie wenigstens teilweise auf den zentralen Abschnitt (12) gefaltet werden.

3. Kopf (4) nach Anspruch 1 oder 2, wobei das erste und zweite Gelenk (36, 40) an einem ersten Verbindungsende (48) des Arms (34) mit dem zentralen Abschnitt (12) positioniert sind.

4. Kopf (4) nach Anspruch 1, 2 oder 3, wobei erste Antriebsmittel (45) an einem ersten Verbindungsende (48) des Arms (34) mit dem zentralen Abschnitt (12) positioniert sind, um die Drehbewegungen des seitlichen Abschnitts (20, 22) in Bezug auf das erste und zweite Gelenk (35, 40) zu steuern.

5. Kopf nach einem der Ansprüche 2 bis 5, wobei der Arm (34) an einem zweiten Verbindungsende (52), an dem ein drittes Gelenk (56) positioniert ist, das eine dritte Drehachse (R"') parallel zu der ersten Drehachse (R') definiert, mit dem seitlichen Abschnitt (20, 22) verbunden ist, wenn der Kopf (4) in einem ersten Arbeitsaufbau ist.

6. Kopf (4) nach Anspruch 5, wobei das zweite Verbindungsende (52) zwischen einer Mittellinie des seitlichen Abschnitts (20, 22) und dem inneren Ende (24) des gleichen seitlichen Abschnitts positioniert ist.

7. Kopf nach einem der Ansprüche 5 bis 6, wobei der Arm (34) U-förmig ist, um eine konkave Aufnahme (60), die dem seitlichen Abschnitt (20, 22) zugewandt ist, zu begrenzen und um die Drehung des seitlichen Abschnitts (20, 22) um die dritte Drehachse (R"') zuzulassen, wobei die konkave Aufnahme (60) den Abschnitt des seitlichen Abschnitts (20, 22), der zwischen dem zweiten Verbindungsende (52) und dem inneren Ende (24) des seitlichen Abschnitts (20, 22) enthalten ist, während der Drehung des Letzteren um die dritte Drehachse (R"') wenigstens teilweise aufnimmt.

8. Kopf (4) nach einem der Ansprüche 5 bis 7, wobei der Arm (34) mit zweiten Antriebsmitteln (46) ausgestattet ist, die an dem zweiten Verbindungsende (52) positioniert sind, um den seitlichen Abschnitt (20, 22) in Bezug auf das dritte Gelenk (56) zu bewegen.

9. Kopf (4) nach einem der vorhergehenden Ansprüche, wobei jeder seitliche Abschnitt (20, 22) wiederum aus einem Paar von längsseitigen Abschnitten (64) zusammengesetzt ist, die in einem Arbeitsaufbau des Kopfs (4) in Bezug auf ein viertes Gelenk (68), das eine vierte Drehachse (W) parallel zu der ersten Drehachse (R') definiert, gelenkig miteinander verbunden sind, wobei es möglich ist, die Abschnitte (64) aufeinander zurück zu klappen.

10. Kopf (4) nach Anspruch 9, wobei die Abschnitte (64) im Wesentlichen eine transversale Abmessung haben, die gleich der Hälfte der transversalen Abmessung des seitlichen Abschnitts (20, 22) ist.

11. Kopf (4) nach einem der vorhergehenden Ansprüche, wobei der zentrale Abschnitt (12) in einem Arbeitsaufbau eine transversale Ausdehnung (T) hat, die kleiner oder gleich einem Drittel der gesamten transversalen Ausdehnung (V) des Kopfs (4) ist.

12. Kopf (4) nach einem der vorhergehenden Ansprüche, wobei die seitlichen Abschnitte (20, 22) mit vorderen Spitzen (76) ausgestattet sind, die frontal zu den Schälerwalzen (8) positioniert sind, um die Kolben vor den Walzen abzufangen, wobei die vorderen Spitzen (76) einen der Walze (8) zugewandten hinteren Abschnitt (80) und einen vorderen Abschnitt (84) entgegengesetzt zu dem hinteren Abschnitt (80) umfassen, wobei der vordere Abschnitt (84) in einem Arbeitsaufbau in Bezug auf eine Spitzenachse (88) parallel zu der Haupttransversalrichtung (Y-Y) gelenkig mit dem hinteren Abschnitt (80) verbunden ist, um fähig zu sein, in einem geklappten Aufbau des Kopfs (4) den vorderen Abschnitt (84) auf dem hinteren Abschnitt (80) zu überlappen.

13. Verfahren zum Zurückklappen eines Kopfs für eine Maisschälmaschine und/oder einen Mähdrescher, das die folgenden Schritte umfasst:
- Prädisponieren eines Kopfs (4) für eine Maisschälmaschine und/oder einen Mähdrescher nach einem der Ansprüche 1 bis 12,
- Positionieren des Kopfs (4) in einem Arbeitsaufbau, wobei die seitlichen Abschnitte (20, 22) in Bezug auf den zentralen Abschnitt (12) ausgerichtet werden,
- Drehen der seitlichen Abschnitte (20, 22) um das erste Gelenk (36), das eine erste Drehrichtung (R') parallel zu der Längsrichtung (X-X) des Vorrückens des Kopfs (4) definiert, um die seitlichen Abschnitte (20, 22) in Bezug auf den zentralen Abschnitt (12) zu trennen und anzuheben,
- Drehen der seitlichen Abschnitte (20, 22) um das zweite Gelenk (40), das eine zweite Drehachse (R') senkrecht zu der ersten Drehachse (R`) definiert, um die seitlichen Abschnitte (20, 22) in gegenseitiger Annäherung in Richtung einer Mittelachsenebene (M-M) des zentralen Abschnitts (12) zu drehen und sie auf einer Ebene im Wesentlichen senkrecht zu der Transversalrichtung (Y-Y) zu positionieren.

14. Klappverfahren nach Anspruch 13, das die folgenden Schritte umfasst:
- Positionieren eines Arms (34), der mit dem seitlichen Abschnitt (20, 22) verbunden ist, an einem zweiten Verbindungsende (52), wobei an dem zweiten Verbindungsende (52) ein drittes Gelenk (56), das eine dritte Drehachse (R"') parallel zu der ersten Drehachse (R') definiert, positioniert wird, wenn der Kopf (4) in einem Arbeitsaufbau ist,
- wobei der Arm (34) U-förmig ist, um eine konkave Aufnahme (60), die dem seitlichen Abschnitt (20, 22) zugewandt ist, zu begrenzen,
- Drehen des seitlichen Abschnitts (20, 22) um die dritte Drehachse (R"'), so dass die konkave Aufnahme (60) den Abschnitt des seitlichen Abschnitts (20, 22), der zwischen dem zweiten Verbindungsende (52) und dem inneren Ende (24) des seitlichen Abschnitts (20, 22) enthalten ist, während der Drehung des Letzteren um die dritte Drehachse (R"') wenigstens teilweise aufnimmt.

15. Klappverfahren nach Anspruch 13 oder 14, das die folgenden Schritte umfasst:
- Ausstatten der seitlichen Abschnitte (20, 22) mit vorderen Spitzen (76), die frontal zu den Schälerwalzen positioniert sind, um die Kolben vor den Walzen abzufangen,
- wobei die vorderen Spitzen (76) einen den Walzen (8) zugewandten hinteren Abschnitt (80) und einen vorderen Abschnitt (84) entgegengesetzt zu dem hinteren Abschnitt (80) umfassen, wobei der vordere Abschnitt (84) in einem Arbeitsaufbau in Bezug auf eine Spitzenachse (88) parallel zu der Haupttransversalrichtung (Y-Y) gelenkig mit dem hinteren Abschnitt (80) verbunden ist,
- Drehen des vorderen Abschnitts (84), um fähig zu sein, ihn in einem geklappten Aufbau des Kopfs auf den hinteren Abschnitt (80) zu überlappen, wobei die Drehung des vorderen Abschnitts vor der Drehung der seitlichen Abschnitte (20, 22) in einer gegenseitigen Annährung in Richtung der Mittelachsenebene (M-M) des zentralen Abschnitts (12) durchgeführt wird.

## Revendications

1. Tête pliante (4) pour une machine de ramassage-égrenage de maïs et/ou une moissonneuse-batteuse appropriée pour réaliser le ramassage et l'égrenage des épis, la tête (4) s'étendant dans une direction transversale (Y-Y), perpendiculaire à une direction longitudinale (X-X) d'avancement de la tête (4) dans l'étape de travail, et comprenant au moins un rouleau de ramassage-égrenage (8) tournant par rapport à un axe de rotation relatif et monté avec des lames pour faire descendre une tige d'un maïs sur la rafle,
la tête (4) comprenant une partie centrale (12) s'étendant le long de la direction transversale principale (Y-Y) entre des extrémités transversales opposées (16, 18) et deux parties latérales (20, 22) positionnées sur les côtés opposés à la partie centrale (12) au niveau de chaque extrémité transversale (16, 18) et alignées avec la partie centrale (12) dans une condition de travail de la tête (4),
chaque partie latérale (20, 22) s'étendant à partir d'une extrémité interne (24), le long de l'extrémité transversale (16, 18) correspondante de la partie centrale (12) dans une configuration de travail, jusqu'à une extrémité externe (28) opposée à l'extrémité interne (24) par rapport à la direction transversale (Y-Y) dans une configuration de travail,
la tête (4) comprenant des moyens d'entraînement (44) pour déplacer les parties latérales (20, 22) afin de passer d'une configuration de travail dans laquelle les parties latérales (20, 22) sont à côté de et alignées avec la partie centrale (12), à une configuration pliée dans laquelle les parties latérales (20, 22) sont au moins partiellement pliées et recouvrent la partie centrale (12),
chaque partie latérale (20, 22) est raccordée de manière opérationnelle à la partie centrale (12) au moyen de l'interposition des moyens de raccordement (32) comprenant un bras (34) relatif qui raccorde chaque partie latérale (20, 22) à la partie centrale (12),
dans laquelle les moyens de raccordement (32) comprennent une première charnière (36) définissant un premier axe de rotation (R') parallèle à la direction longitudinale (X-X) d'avancement de la tête (4), afin de séparer et faire monter les parties latérales (20, 22) par rapport la partie centrale (12), et **caractérisée en ce qu'**elle comprend une seconde charnière (40) définissant un deuxième axe de rotation (R"), perpendiculaire au premier axe de rotation (R') afin de faire tourner les parties latérales (20, 22) en approche réciproque vers un plan central (M-M) de la partie centrale (12) et pour les positionner sur un plan sensiblement perpendiculaire à ladite direction transversale (Y-Y).

2. Tête (4) selon la revendication 1, dans laquelle les moyens d'entraînement (44) sont raccordés de manière opérationnelle aux moyens de raccordement (32) et/ou aux parties latérales (20, 22) afin de déplacer les parties latérales (20, 22) par rapport auxdites première et deuxième charnières (36, 40), en les pliant au moins partiellement sur la partie centrale (12).

3. Tête (4) selon la revendication 1 ou 2, dans laquelle les première et deuxième charnières (36, 40) sont positionnées au niveau d'une première extrémité de raccordement (48) du bras (34) à la partie centrale (12).

4. Tête (4) selon la revendication 1, 2 ou 3 dans laquelle les premiers moyens d'entraînement (45) sont positionnés au niveau d'une première extrémité de raccordement (48) du bras (34) à la partie centrale (12) afin de contrôler les mouvements de rotation de la partie latérale (20, 22) par rapport aux première et deuxième charnières (36, 40).

5. Tête (4) selon l'une quelconque des revendications 2 à 5, dans laquelle le bras (34) est raccordé à la partie centrale (20, 22) au niveau d'une seconde extrémité de raccordement (52) à laquelle une troisième charnière (56) est positionnée, définissant un troisième axe de rotation (R"') parallèle au premier axe de rotation (R'), lorsque la tête (4) est dans une configuration de travail.

6. Tête (4) selon la revendication 5, dans laquelle ladite seconde extrémité de raccordement (52) est positionnée entre une ligne centrale de la partie latérale (20, 22) et ladite extrémité interne (24) de la même partie latérale.

7. Tête (4) selon l'une quelconque des revendications 5 à 6, dans laquelle le bras (34) est en forme de U afin de délimiter un siège concave (60) faisant face à la partie latérale (20, 22) et afin de permettre la rotation de la partie latérale (20, 22) autour du troisième axe de rotation (R"'), ledit siège concave (60) logeant au moins partiellement la section de partie latérale (20, 22) comprise entre la seconde extrémité de raccordement (52) et l'extrémité interne (24) de la partie latérale (20, 22), pendant la rotation de cette dernière autour du troisième axe de rotation (R"').

8. Tête (4) selon l'une quelconque des revendications 5 à 7, dans laquelle le bras (34) est monté avec des seconds moyens d'entraînement (46) positionnés au niveau de la seconde extrémité de raccordement (52) afin de déplacer la partie latérale (20, 22) par rapport à la troisième charnière (56).

9. Tête (4) selon l'une quelconque des revendications précédentes, dans laquelle chaque partie latérale (20, 22) est composée à son tour d'une paire de sections (64) à côté de et articulées entre elles par rapport à une quatrième charnière (68) définissant un quatrième axe de rotation (W) parallèle au premier axe de rotation (R') dans une configuration de travail de tête (4), il est possible de replier les sections (64) l'une sur l'autre.

10. Tête (4) selon la revendication 9, dans laquelle lesdites sections (64) ont sensiblement une dimension transversale égale à la moitié de la dimension transversale de la partie latérale (20, 22).

11. Tête (4) selon l'une quelconque des revendications précédentes, dans laquelle la partie centrale (12) a une extension transversale (T) inférieure ou égale à un tiers de l'extension transversale totale (V) de la tête (4) dans une configuration de travail.

12. Tête (4) selon l'une quelconque des revendications précédentes, dans laquelle les parties latérales (20, 22) sont montées avec des pointes avant (76) positionnées de manière frontale par rapport aux rouleaux de ramassage-égrenage (8) afin d'intercepter les épis avant les rouleaux, dans laquelle lesdites pointes avant (76) comprennent une partie arrière (80) faisant face aux rouleaux (8), et une partie avant (84) opposée à la partie arrière (80), la partie avant (84) étant articulée par rapport la partie arrière (80) par rapport à un axe de pointe (88) parallèle à la direction transversale principale (Y-Y) dans une configuration de travail, afin de pouvoir faire chevaucher la partie avant (84) sur la partie arrière (80) dans une configuration pliée de la tête (4).

13. Procédé pour replier une tête pour une machine de ramassage-égrenage de maïs et/ou moissonneuse-batteuse comprenant les étapes consistant à :
prédisposer une tête (4) pour une machine de ramassage-égrenage de maïs et/ou une moissonneuse-batteuse selon l'une quelconque des revendications 1 à 12,
positionner ladite tête (4) dans une configuration de travail, dans laquelle les parties latérales (20, 22) sont alignées par rapport à la partie centrale (12),
faire tourner les parties latérales (20, 22) autour de la première charnière (36) définissant une premier axe de rotation (R') parallèle à la direction longitudinale (X-X) d'avancement de la tête (4), afin de séparer et de faire monter les parties latérales (20, 22) par rapport à la partie centrale (12),
faire tourner les parties latérales (20, 22) autour de la deuxième charnière (40) définissant un deuxième axe de rotation (R') perpendiculaire au premier axe de rotation (R'), afin de faire tourner les parties latérales (20, 22) en approche réciproque vers un plan central (M-M) de la partie centrale (12) et pour les positionner sur un plan sensiblement perpendiculaire à ladite direction transversale (Y-Y).

14. Procédé de pliage selon la revendication 13, comprenant les étapes consistant à :
positionner un bras (34) raccordé à la partie latérale (20, 22) au niveau d'une seconde extrémité de raccordement (52), dans lequel, au niveau de ladite seconde extrémité de raccordement (52), une troisième charnière (56) est positionnée, définissant un troisième axe de rotation (R"') parallèle au premier axe de rotation (R'), lorsque la tête (4) est dans une configuration de travail,
dans lequel le bras (34) est en forme de U afin de délimiter un siège concave (60) faisant face à la partie latérale (20, 22),
faire tourner la partie latérale (20, 22) autour du troisième axe de rotation (R"') de sorte que ledit siège concave (60) loge au moins partiellement la section de la partie latérale (20, 22) comprise entre la seconde extrémité de raccordement (52) et l'extrémité interne (24) de la partie latérale (20, 22), pendant la rotation de cette dernière autour du troisième axe de rotation (R"').

15. Procédé de pliage selon la revendication 13 ou 14, comprenant les étapes consistant à :
monter les parties latérales (20, 22) avec des pointes avant (76) positionnées de manière frontale par rapport aux rouleaux de ramassage-égrenage afin d'intercepter les épis avant les rouleaux,
les pointes avant (76) comprenant une partie arrière (80) faisant face aux rouleaux (8) et une partie avant (84) opposée à la partie arrière (80), la partie avant (84) étant articulée par rapport à la partie arrière (80) par rapport à un axe de pointe (88) parallèle à la direction transversale principale (Y-Y) dans une configuration de travail,
faire tourner la partie avant (84) afin qu'elle puisse chevaucher la partie arrière (80) dans une configuration pliée de la tête, ladite rotation de la partie avant étant réalisée pendant la rotation des parties latérales (20, 22) en approche réciproque vers le plan central (M-M) de la partie centrale (12).
